# FASCICULE DE BREVET EUROPEEN

(11) **EP 3 736 413 B1**
(45) Date de publication et mention de la délivrance du brevet: **20.10.2021**
(21) Numéro de dépôt: 20172639.5
(22) Date de dépôt: 04.05.2020
(51) Int. Cl.: F01D 11/00, F16J 15/02, F16J 15/08

(54) **MODULE DE TURBOMACHINE ÉQUIPÉ D'UN DISPOSITIF DE MAINTIEN DE LAMELLES D' ÉTANCHÉITÉ**
TURBOTRIEBWERKSMODUL, DAS MIT EINER HALTEVORRICHTUNG FÜR DICHTUNGSLAMELLEN AUSGESTATTET IST
TURBINE ENGINE MODULE PROVIDED WITH A DEVICE FOR SUPPORTING SEALING STRIPS

(30) Priorité: 10.05.2019 FR 1904888
(43) Date de publication de la demande: 11.11.2020
(73) Titulaire: SAFRAN AIRCRAFT ENGINES, 75015 Paris (FR)
(72) Inventeur: MOREAU, Vincent, Gérard, Michel, 77550 MOISSY-CRAMAYEL (FR); BENKACI, Sabrina, 77550 MOISSY-CRAMAYEL (FR); BERCHE, Emmanuel, Wilfrid, Léon, 77550 MOISSY-CRAMAYEL (FR)
(74) Mandataire: Gevers & Orès

(56) Documents cités:
- EP-A1- 1 517 005
- EP-A1- 1 918 549
- EP-A1- 2 060 743
- FR-A1- 2 887 588
- US-A- 5 118 120

## Description

### Domaine technique de l'invention

Le domaine de la présente invention est celui des turbomachines aéronautiques et plus particulièrement celui des systèmes d'étanchéité à lamelles, en particulier pour un distributeur d'une turbine haute pression d'un moteur d'aéronef.

### Arrière-plan technique

L'état de l'art comprend notamment les documents FR-A1-2 786 222 et US-A-5118120.

Les systèmes d'étanchéité à lamelles sont communément utilisés dans une turbomachine pour assurer l'étanchéité aux fluides entre des enceintes annulaires interne et externe d'une chambre de combustion, dans lesquelles circulent de l'air de refroidissement de distributeurs et des aubes directrices, et la veine de gaz chaud délivrée par la chambre de combustion. Ces lamelles sont disposées dans des espaces annulaires séparant des éléments de plateforme d'un élément de structure et prennent appui, en position d'étanchéité, sur des génératrices de ces éléments.

Ces lamelles sont soumises aux pressions régnant sur leurs deux faces. En général, la pression des gaz de refroidissement est supérieure à la pression des gaz chauds et les lamelles sont disposées de telle manière que la différence de pression agit favorablement sur l'étanchéité recherchée. Toutefois, les turbomachines étant soumises à des conditions de fonctionnement extrêmement variables, de nombreux problèmes peuvent survenir, dus notamment aux dilatations, aux vibrations et aux faibles différences de pression dans certaines phases de vol. C'est pourquoi, les systèmes d'étanchéité comportent des dispositifs de maintien pour solliciter et maintenir continuellement les lamelles dans leur position d'étanchéité. Certaines turbines à haute pression sont composées d'un distributeur dont l'étanchéité est effectuée par des lamelles et des dispositifs de maintien aptes à plaquer les lamelles adjacentes du distributeur, afin d'éviter les fuites entre les secteurs du distributeur et la chambre de combustion à l'amont et le carter externe à l'aval.

Dans la présente demande, « amont » et « aval » font référence à l'écoulement des gaz dans la turbomachine, et en particulier dans un module de turbomachine.

Ce système d'étanchéité est décrit dans le document FR-A1-2 829 796 et illustré aux figures 1 et 2 qui seront détaillées ci-dessous. Cependant, l'appui sur des lamelles adjacentes des secteurs peut causer des décalages entre ces secteurs pendant le fonctionnement du moteur et provoquer une dissymétrie du système d'étanchéité. Cette dissymétrie peut conduire à une précontrainte (pouvant engendrer une plastification) du dispositif de maintien lors de son assemblage et également pendant le fonctionnement du moteur. Par ailleurs, ce système d'étanchéité requiert plusieurs pliages de l'élément formant le dispositif de maintien qui peut s'avérer complexe à fabriquer. L'assemblage et le fonctionnement de ce dispositif de maintien dans la turbomachine est également difficile à mettre en place. En effet, les portions pliées du dispositif de maintien sont fixées au moyen de plusieurs rivets et sur plusieurs éléments composant le distributeur, nécessitant un équilibrage de la dissymétrie du système d'étanchéité. De plus, une plastification du dispositif de maintien et/ou un décalage entre les secteurs du distributeur, peuvent causer un mauvais plaquage des lamelles et provoquer des fuites. Toutes ces anomalies du système d'étanchéité peuvent impacter la performance du moteur et provoquer des brûlures des pales du distributeur et des perturbations aérodynamiques dans la veine.

Dans ce contexte, il est intéressant de pallier les inconvénients de l'art antérieur, en proposant une solution d'étanchéité fiable, à durée de vie améliorée et qui assure un maintien stable des lamelles d'étanchéité des secteurs du distributeur.

### Résumé de l'invention

La présente invention a pour but de pallier un ou plusieurs inconvénients de l'art antérieur en proposant une solution qui est simple, efficace et économique à produire.

L'invention propose ainsi un module de turbomachine, en particulier d'aéronef, comprenant un distributeur annulaire sectorisé et interposé axialement entre deux éléments de structure, ledit distributeur comportant plusieurs secteurs ayant des aubes directrices qui s'étendent entre des éléments de plateforme intérieure et extérieure, l'un au moins desdits éléments de plateforme de chaque secteur portant, d'une part, au moins une lamelle d'étanchéité configurée pour assurer l'étanchéité aux fluides entre ledit élément de plateforme et l'élément de structure adjacent, et d'autre part, un dispositif de maintien de ladite lamelle en position d'étanchéité, le dispositif de maintien comportant au moins une lame ressort s'étendant circonférentiellement à la périphérie dudit élément de plateforme et prenant appui sur ladite lamelle; caractérisé en ce que chaque lame ressort comprend une portion médiane fixée à un élément de plateforme d'un secteur, et des portions d'extrémité opposées qui sont en appui sur ladite lamelle portée par cet élément de plateforme.

Cette configuration de la lame ressort présente comme avantage d'apporter un double appui sur une même lamelle d'un même secteur de distributeur. Le maintien de la lame ressort par double appui sur la lamelle permet, d'une part, de rendre fiable le plaquage de la lamelle en position d'étanchéité, et d'autre part, de mieux répartir les efforts de contrainte sur la lame ressort. Contrairement à l'art antérieur, la lame ressort, grâce à sa forme et ses dimensions particulières, permet d'amortir et d'absorber plus efficacement les pressions et/ou vibrations induites sur le système d'étanchéité. Ainsi, la lame ressort est moins sujette à une plastification lors de son montage sur la lamelle et son fonctionnement dans la turbomachine. Les portions d'extrémité libres de la lame ressort sont également moins sensibles à la fissure et à la cassure. Enfin, cette configuration particulière du système d'étanchéité permet de supprimer l'opération d'équilibrage de la lame ressort par rapport à la lamelle et le secteur et donc de supprimer également la dissymétrie et le décalage pouvant résulter entre les secteurs de distributeur. Selon une autre particularité, une première portion d'extrémité de chaque lame ressort est en appui sur une lamelle à proximité d'une première extrémité circonférentielle de cette lamelle, et une seconde portion d'extrémité de cette lame ressort est en appui sur cette lamelle à distance d'une seconde extrémité circonférentielle de cette lamelle.

Selon une autre particularité, la portion médiane est plus proche de la première portion d'extrémité que de la seconde portion d'extrémité de la lame ressort.

Selon une autre particularité, la portion médiane a une forme générale en C et comprend deux parois formant entre elles un espace de réception d'une première patte de fixation dudit élément de plateforme.

Selon une autre particularité, la lame ressort est fixée par un rivet traversant ladite portion médiane et ladite première patte de fixation.

Cette configuration présente comme avantage de réaliser un seul point de fixation de la lame ressort avec la lamelle sur l'élément de plateforme du secteur du distributeur. Cette seule fixation permet à la lame ressort d'avoir plus de liberté et plus de souplesse, afin de limiter la plastification de la lame ressort. Un autre intérêt d'attacher la lame ressort sur la lamelle selon cette configuration de l'invention, est de limiter l'utilisation de pièces de fixation supplémentaires encombrant le système d'étanchéité.

Selon une autre particularité, l'élément de plateforme du secteur comprend une seconde patte de fixation d'extrémité indépendante de la lame ressort. Selon une autre particularité, les portions d'extrémité de chaque lame ressort sont surépaissies et comprennent chacune une surface plane d'appui sur une lamelle.

Ces portions d'extrémité surépaissies permettent un plaquage plus important sur les deux extrémités circonférentielles de la lamelle.

Selon une autre particularité, la lamelle a une forme générale incurvée ou en arc.

Selon une autre particularité, chaque lame ressort s'étend sur une longueur comprise entre 60% et 80% de la longueur totale de la lamelle.

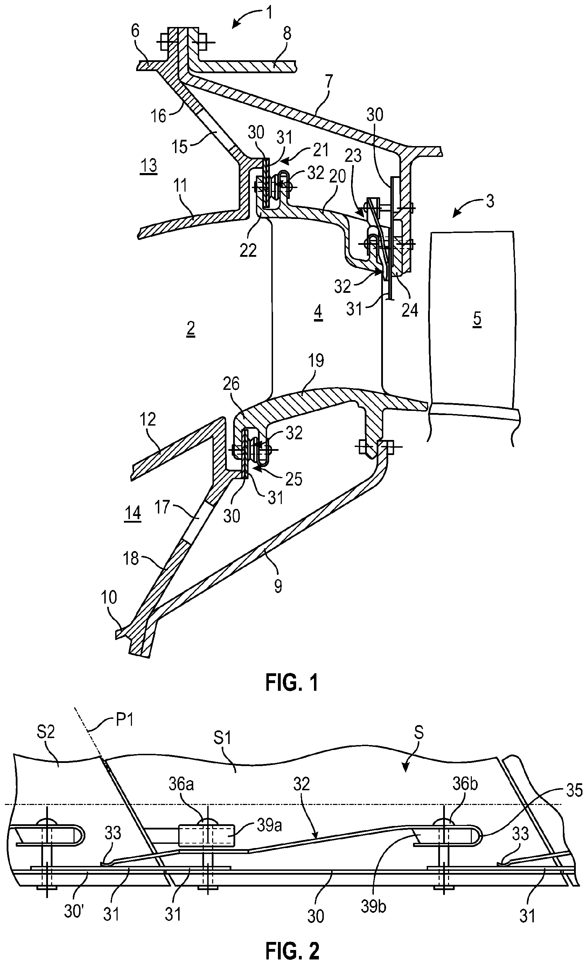

Ces dimensions particulières de la lame ressort permettent de réaliser le double appui sur une seule lamelle d'un même secteur de distributeur. Au contraire, la longueur du dispositif de maintien de l'art antérieur (figure 2) correspond à au moins 90% de la longueur totale de la lamelle pour que ce dispositif puisse plaquer la lamelle adjacente du secteur adjacent du distributeur.

Selon une autre particularité, la lame ressort est réalisée dans un alliage résistant à la chaleur, par exemple à base de cobalt.

L'invention concerne également une turbomachine machine d'aéronef comprenant au moins un module selon une des particularités de l'invention.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une demi vue schématique en coupe axiale d'un module d'une turbomachine équipé d'un dispositif de maintien de lamelles d'étanchéité selon l'invention ,
[Fig.2] la figure 2 est une vue schématique partielle et de dessus d'un dispositif de maintien de lamelles d'étanchéité adjacentes, selon l'art antérieur ;
[Fig.3] la figure 3 est une vue schématique en perspective d'une lame ressort d'un dispositif de maintien, selon un mode de réalisation de l'invention ;
[Fig.4] la figure 4 est une vue schématique partielle de face du dispositif de maintien de la figure 3 dans son environnement de montage.

### Description détaillée de l'invention

Sur la figure 1 est illustré partiellement un module d'une turbomachine 1, telle qu'un turbomoteur d'aéronef, s'étendant suivant un axe longitudinal X et comportant une chambre de combustion 2, et une turbine à haute pression 3 constituée d'un ou plusieurs étages. Chaque étage de la turbine comporte une rangée d'aubes directrices 4 et une rangée d'aubes mobiles 5 disposées en alternance de manière connue.

La turbine haute pression est supportée par une structure comportant, du côté radialement extérieur, un carter extérieur 6 de la chambre de combustion, une bague extérieure 7 de turbine et un carter 8 de turbine reliés ensemble par des boulons. Du côté radialement intérieur de la turbine 3, un carter intérieur 9 de la turbine est relié à un carter intérieur 10 de la chambre de combustion.

La chambre de combustion 2 est annulaire et délimitée par une chemise extérieure 11 et une chemise intérieure 12.

De façon classique, de l'air de refroidissement à haute pression circule autour de la chambre de combustion annulaire 2, dans l'enceinte annulaire extérieure 13 délimitée par le carter extérieur 6 et la chemise extérieure 11 de la chambre de combustion 2 et dans l'enceinte annulaire intérieure 14 délimitée par le carter intérieur 10 et la chemise intérieure 12 de la chambre de combustion 2. L'air de refroidissement s'écoule en aval à travers des orifices 15 ménagés dans la paroi 16 reliant les extrémités aval du carter extérieur 6 et de la chemise extérieure 11 de la chambre de combustion 2, afin de refroidir les aubes directrices 4, et à travers des orifices 17, ménagés dans la paroi 18 reliant les extrémités aval du carter intérieur 10 et de la chemise intérieure 12 de la chambre de combustion 2, afin de refroidir des plateformes intérieures 19 des aubes directrices 4.

De manière connue, la rangée d'aubes directrices 4 forme un distributeur qui est sectorisé et formé de secteurs S monoblocs comportant chacun plusieurs aubes directrices 4 reliant un élément de plateforme extérieure 20 et un élément de plateforme intérieure 19. Il est nécessaire d'éviter toute fuite d'air entre les éléments de plateforme 19, 20 des secteurs S et les éléments de structure adjacents.

Dans le module de turbomachine, un système d'étanchéité est interposé dans les espaces suivants :
- l'espace 21 entre l'extrémité amont 22 des éléments de plateforme extérieure 20 et la paroi 16,
- l'espace 23 entre l'extrémité aval 24 des éléments de plateforme extérieure 20 et la bague extérieure 7 de la turbine, et
- l'espace 25 entre l'extrémité amont 26 de la plateforme intérieure 19 et la paroi 18.

Dans la suite de la demande, un « système d'étanchéité » est défini comme comprenant au moins une lamelle et un dispositif de maintien de cette lamelle en position d'étanchéité sur au moins un élément de plateforme d'un secteur du distributeur.

Sur la figure 2 est illustré le système d'étanchéité de l'art antérieur du document FR-A1-2 829 796, qui comprend des lamelles 30, 30', pouvant être courbes et jointives, et un dispositif de maintien 32 des lamelles 30, 30' en position d'étanchéité. Chacune des lamelles d'étanchéité 30, 30' est portée par un élément de plateforme (extérieure 20 et/ou intérieure 19) d'un secteur S de distributeur. Ces lamelles s'étendent radialement vers l'extérieur pour les lamelles obturant les espaces 21 et 23 et vers l'intérieur pour les lamelles destinées à obturer l'espace 25, et comportent une génératrice en appui sur l'élément de structure adjacent.

Deux lamelles adjacentes 30, 30' d'un même système d'étanchéité sont jointives dans un plan P1 séparant deux secteurs consécutifs S1, S2. Ainsi que cela se voit sur la figure 2, la jointure de ces deux lamelles 30, 30' est recouverte par un couvre-joint 31 interposé entre les extrémités adjacentes de ces lamelles et un organe de maintien 33 du dispositif de maintien 32 qui sollicite les lamelles adjacentes 30, 30' en position d'étanchéité. Ce dispositif de maintien 32 comprend donc l'organe de maintien 33, qui est une extrémité libre et arrondie, et une extrémité recourbée 35 en forme de U et éloignée de l'organe de maintien 33. Le dispositif de maintien 32 est retenu sur un secteur S1 au moyen de deux rivets 36a, 36b fixées respectivement sur des pattes de fixation 39a, 39b d'un élément de plateforme 19, 20. Les tiges de ces rivets 36a, 36b traversent des orifices ménagés en correspondance dans le dispositif de maintien 32 (plus précisément dans l'extrémité recourbée 35 et une portion intermédiaire du dispositif 32), la lamelle 30 et le couvre joint 31. Cet agencement de l'organe de maintien 32 sur deux secteurs adjacents présente plusieurs inconvénients mentionnés dans l'arrière plan, notamment un risque de décalage des secteurs du distributeur.

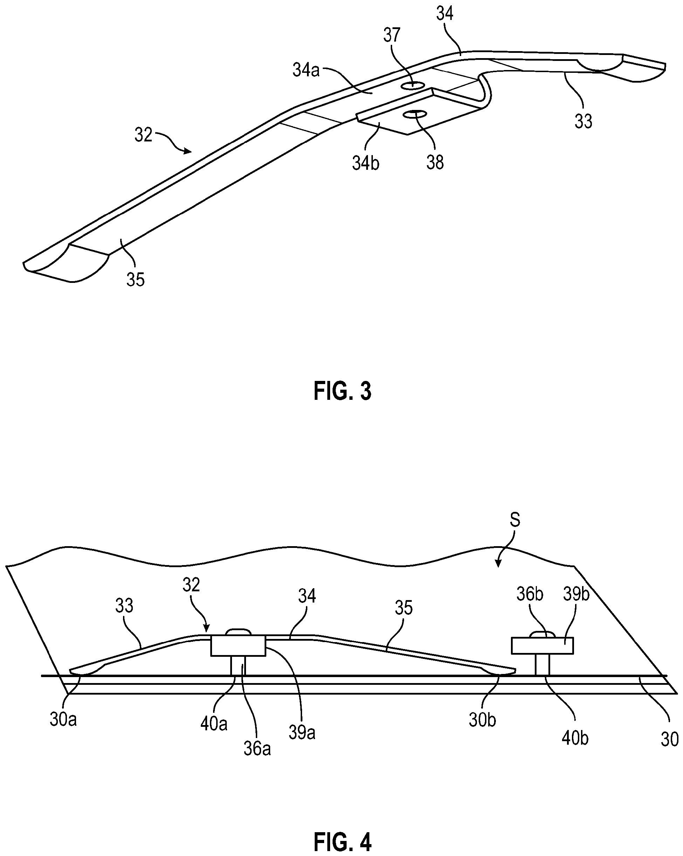

Le système d'étanchéité de l'invention est également apte à être installer dans le module de turbomachine 1 illustré sur la figure 1. Ce système d'étanchéité du module de turbomachine 1 de l'invention est illustré sur les figures 3 et 4.

Sur la figure 3 est représentée en perspective, une lame ressort 32 d'un dispositif de maintien selon l'invention. Cette lame ressort 32 a une forme générale allongée et comprend une première et seconde portions d'extrémité 33, 35 libres et opposées l'une de l'autre, ainsi qu'une portion médiane 34 disposée entre ces deux portions d'extrémité. L'extrémité libre de la première portion 33 est plus proche de la portion médiane 34, que ne l'est l'extrémité libre de la seconde portion 35.

Ces différentes portions 33, 34 et 35 de la lame ressort 32 peuvent être formées d'une seule pièce de matériau en alliage résistant à la chaleur, par exemple à base de Cobalt.

De manière particulière, les portions d'extrémité 33, 35 sont plus épaisses que le reste de la lame ressort 32.

Dans l'exemple représenté, la portion médiane 34 est recourbée de forme générale en C ou U pour former deux parois parallèles, respectivement supérieure 34a et inférieure 34b, délimitant entre elles un espace de réception, par exemple pour une première patte de fixation de l'élément de plateforme. Plus particulièrement, la portion médiane 34 recourbée en forme de U ou C peut comprendre une paroi transversale liant ces deux parois, de préférence longitudinales, 34a, 34b entre elles. La forme générale en U ou en C dont le passage ouvert est destinée à être orienté radialement en direction de la rangée d'aubes directrices 4, lorsque la lame ressort 32 est assemblée dans le module de turbomachine (figure 1). Les parois 34a, 34b comprennent chacune une ouverture 37, 38 en vis-à-vis, par exemple pour recevoir un moyen de fixation.

Avantageusement, la lame ressort 32 peut avoir une forme incurvée ou en arc et être réalisée par un pliage au niveau de la portion médiane 34 incurvant de façon prédéterminée la lame ressort pour que les portions d'extrémité 33, 35 soient élastiquement déformables. Cette lame ressort 32 comprend également un perçage au niveau de la portion médiane 34 de façon à ce que cette portion médiane puisse être fixée à l'élément de plateforme. Cette conception de la lame ressort par un seul perçage et un seul pliage permet de supprimer les zones de contrainte au niveau de la portion médiane, qui est généralement sujette à une plastification, tout en améliorant la fonction d'amortissement des contraintes de fonctionnement de la lame ressort.

La lame ressort de la figure 3 est représentée dans son environnement à la figure 4. Dans la figure 4, la lame ressort est utilisée pour assurer le maintien d'une lamelle 30 d'étanchéité portée par un élément de plateforme 19, 20 d'un secteur S de distributeur. La lame ressort 32 s'étend à la périphérie du secteur S et prend appui uniquement sur la lamelle 30 d'un seul et même secteur S, contrairement à l'art antérieur. Cet agencement est reproduit sur les lamelles 30 des différents secteurs S du distributeur.

La première portion d'extrémité 33 de la lame ressort est en appui sur une première extrémité circonférentielle 30a de la lamelle 30, et sa seconde portion d'extrémité 35 est en appui sur une seconde extrémité circonférentielle 30b de la lamelle 30. Ainsi, de façon similaire à l'art antérieur, un premier appui (ou plaquage) sur la lamelle 30 est réalisé par la première portion d'extrémité 33, et cet appui est, d'une part, proche de la portion médiane 34, et d'autre part, éloignée de la seconde portion d'extrémité 35 de la lame ressort 32. Un second appui sur la lamelle 30, non enseignée dans l'art antérieur, est réalisé par la seconde portion d'extrémité 35 et cet appui est, préférentiellement, proche d'un second orifice 40b de la seconde extrémité circonférentielle 30b de la lamelle 30. Ce second orifice 40b permet à cette lamelle 30 de se fixer à une seconde patte de fixation 39b de l'élément de plateforme par un rivet 36b. Ce double appui de la lame ressort 32 sur la lamelle 30 permet, d'une part, d'équilibrer le plaquage en position d'étanchéité de la lame ressort sur une même lamelle 30 d'un même secteur S de distributeur, et d'autre part, d'assurer une bonne répartition des efforts sur l'ensemble de la lame ressort et donc de supprimer sa plastification.

De plus, la lame ressort 32 est en liaison fixe avec la lamelle 30 par la portion médiane 34 sur l'élément de plateforme du secteur. En effet, la portion médiane 34 est fixée à travers un premier orifice 40a de la lamelle 30 sur une première patte de fixation 39a de l'élément de plateforme par un rivet 36a. Ainsi, un seul point de fixation de la lame ressort 32 est suffisant pour équilibrer les appuis des portions d'extrémité 33, 35 de par et d'autre de cette fixation et donc de limiter également la plastification de la lame ressort.

Par ailleurs, la longueur ou dimension circonférentielle de la lame ressort 32 est inférieure à celle d'une lamelle 30 ou d'un secteur S du distributeur. Ce dimensionnement permet de réaliser le double appui de la lame ressort directement sur la lamelle sur laquelle elle est montée. De plus, on notera que la fonction ressort ou d'amortissement caractéristique de la lame ressort peut être obtenue en dimensionnant spécifiquement une épaisseur et une longueur nécessaire pour que cette lame se déplace d'une certaine longueur en fonction d'un effort donné. Par exemple et de façon non limitative, une lame ressort avec une faible épaisseur et de longueur plus importante permet de réduire la raideur et donc d'augmenter l'amortissement de cette lame. Par ailleurs, cette nouvelle configuration et cet assemblage du dispositif de maintien sur la lamelle s'adapte facilement sur les distributeurs actuels sans modification de la structure ou de l'agencement du distributeur ou des pièces adjacentes.

Ainsi, le système d'étanchéité à lamelles équipé dans le module de turbomachine de la présente invention est avantageux par rapport à l'art antérieur pour plusieurs raisons :
- il renforce l'étanchéité sur la lamelle par un double appui du dispositif de maintien ;
- il supprime la plastification de la lame ressort du dispositif de maintien ;
- il supprime la dissymétrie et l'équilibrage du système d'étanchéité ;
- il supprime le décalage des secteurs du distributeur ;
- il simplifie la fabrication (par un pliage et un perçage) de la lame ressort du dispositif de maintien ;
- il s'adapte aux distributeurs existants.

De manière générale, le dispositif de maintien à double appui sur une même lamelle d'étanchéité permet d'améliorer les performances du moteur et limiter les perturbations aérodynamiques dans la veine de la turbomachine. Les solutions proposées sont simples, efficaces et économiques à réaliser et à assembler sur une turbomachine, tout en assurant une étanchéité fiable et à durée de vie optimale entre les distributeurs et la chambre de combustion de la turbomachine.

## Revendications

1. Module de turbomachine, en particulier d'aéronef, comprenant un distributeur annulaire sectorisé et interposé axialement entre deux éléments de structure, ledit distributeur comportant plusieurs secteurs (S) ayant des aubes directrices (4) qui s'étendent entre des éléments de plateforme intérieure (19) et extérieure (20), l'un au moins desdits éléments de plateforme de chaque secteur (S) portant, d'une part, au moins une lamelle d'étanchéité (30) configurée pour assurer l'étanchéité aux fluides entre ledit élément de plateforme (19, 20) et l'élément de structure adjacent, et d'autre part, un dispositif de maintien de ladite lamelle (30) en position d'étanchéité, le dispositif de maintien comportant au moins une lame ressort (32) s'étendant circonférentiellement à la périphérie dudit élément de plateforme (19, 20) et prenant appui sur ladite lamelle (30); **caractérisé en ce que** chaque lame ressort (32) comprend une portion médiane (34) fixée à un élément de plateforme d'un secteur (S), et des portions d'extrémité (33, 35) opposées qui sont en appui sur ladite lamelle (30) portée par cet élément de plateforme (19, 20).

2. Module de turbomachine selon la revendication 1, **caractérisé en ce qu'**une première portion d'extrémité (33) de chaque lame ressort (32) est en appui sur une lamelle (30) à proximité d'une première extrémité circonférentielle (30a) de cette lamelle (30), et une seconde portion d'extrémité (35) de cette lame ressort (32) est en appui sur cette lamelle (30) à distance d'une seconde extrémité circonférentielle (30b) de cette lamelle (30).

3. Module de turbomachine selon la revendication 1 ou 2, caractérisé ladite portion médiane (34) est plus proche de la première portion d'extrémité (33) que de la seconde portion d'extrémité (35) de la lame ressort (32).

4. Module de turbomachine selon l'une des revendications 1 à 3, **caractérisé en ce que** ladite portion médiane (34) a une forme générale en C et comprend deux parois (34a, 34b) formant entre elle un espace de réception d'une première patte de fixation (39a) dudit élément de plateforme (19, 20).

5. Module de turbomachine selon la revendication 4, caractérisé chaque lame ressort (32) est fixée par un rivet (36a) traversant ladite portion médiane (34) et ladite première patte de fixation (39a).

6. Module de turbomachine selon la revendication 4 ou 5, **caractérisé en ce que** l'élément de plateforme (19, 20) du secteur (S) comprend une seconde patte de fixation (39b) d'extrémité indépendante de la lame ressort (32).

7. Module de turbomachine selon l'une des revendications 1 à 6, **caractérisé en ce que** les portions d'extrémité (33, 55) de chaque lame ressort (32) sont surépaissies et comprennent chacune une surface plane d'appui sur une lamelle (30).

8. Module de turbomachine selon l'une des revendications 1 à 7, **caractérisé en ce que** la lamelle (30) a une forme générale incurvée ou en arc.

9. Module de turbomachine selon l'une des revendications 1 à 8, **caractérisé en ce que** chaque lame ressort (32) s'étend sur une longueur comprise entre 60% et 80% de la longueur totale de la lamelle (30).

10. Module de turbomachine selon l'une des revendications 1 à 9, **caractérisé en ce que** la lame ressort (32) est réalisée dans un alliage résistant à la chaleur, par exemple à base de cobalt.

11. Turbomachine d'aéronef, **caractérisée en ce qu'**elle comprend au moins un module selon l'une des revendications 1 à 10.

## Patentansprüche

1. Turbomaschinenmodul, insbesondere für ein Luftfahrzeug, das einen ringförmigen Verteiler umfasst, der sektorisiert und axial zwischen zwei Strukturelementen eingesetzt ist, wobei der Verteiler mehrere Sektoren (S) umfasst, die Leitschaufeln (4) aufweisen, die sich zwischen einem inneren (19) und einem äußeren (20) Plattformelement erstrecken, wobei mindestens eines dieser Plattformelemente jedes Sektors (S) einerseits mindestens eine Dichtungslamelle (30) trägt, die konfiguriert ist, um die Fluiddichtigkeit zwischen dem Plattformelement (19, 20) und dem angrenzenden Strukturelement zu gewährleisteen, und andererseits eine Vorrichtung zum Halten der Lamelle (30) in der Dichtungsposition, wobei die Haltevorrichtung mindestens ein Federblatt (32) umfasst, das sich umfänglich an der Peripherie des Plattformelements (19, 20) erstreckt und auf der Lamelle (30) aufliegt; **dadurch gekennzeichnet, dass** jedes Federblatt (32) einen mittleren Abschnitt (34) umfasst, der an einem Plattformelement eines Sektors (S) befestigt ist, und gegenüberliegende Endabschnitte (33, 35), die auf der von diesem Plattformelement (19, 20) getragenen Lamelle (30) aufliegen.

2. Turbomaschinenmodul nach Anspruch 1, **dadurch gekennzeichnet, dass** ein erster Endabschnitt (33) jeder Blattfeder (32) auf einer Lamelle (30) in der Nähe eines ersten Umfangsendes (30a) dieser Lamelle (30) aufliegt und ein zweiter Endabschnitt (35) dieser Blattfeder (32) auf dieser Lamelle (30) in einem Abstand von einem zweiten Umfangsende (30b) dieser Lamelle (30) aufliegt.

3. Turbomaschinenmodul nach Anspruch 1 oder 2, **dadurch gekennzeichnet, dass** der mittlere Abschnitt (34) näher am ersten Endabschnitt (33) als am zweiten Endabschnitt (35) der Blattfeder (32) liegt.

4. Turbomaschinenmodul nach einem der Ansprüche 1 bis 3, **dadurch gekennzeichnet, dass** der mittlere Abschnitt (34) eine allgemeine C-Form aufweist und zwei Wände (34a, 34b) umfasst, die untereinander einen Raum zur Aufnahme einer ersten Befestigungslasche (39a) des Plattformelements (19, 20) bilden.

5. Turbomaschinenmodul nach Anspruch 4, **dadurch gekennzeichnet, dass** jede Blattfeder (32) mit einem Niet (36a) befestigt ist, der durch den mittleren Abschnitt (34) und die erste Befestigungslasche (39a) hindurchführt.

6. Turbomaschinenmodul nach Anspruch 4 oder 5, **dadurch gekennzeichnet, dass** das Plattformelement (19, 20) des Sektors (S) eine von der Blattfeder (32) unabhängige zweite Endbefestigungslasche (39b) umfasst.

7. Turbomaschinenmodul nach einem der Ansprüche 1 bis 6, **dadurch gekennzeichnet, dass** die Endabschnitte (33, 55) jeder Blattfeder (32) verdickt sind und jeweils eine ebene Auflagefläche auf einer Lamelle (30) umfassen.

8. Turbomaschinenmodul nach einem der Ansprüche 1 bis 7, **dadurch gekennzeichnet, dass** die Lamelle (30) eine allgemeine gekrümmte oder gebogene Form aufweist.

9. Turbomaschinenmodul nach einem der Ansprüche 1 bis 8, **dadurch gekennzeichnet, dass** sich jede Blattfeder (32) über eine Länge erstreckt, die zwischen 60% und 80% der Gesamtlänge der Lamelle (30) enthalten ist.

10. Turbomaschinenmodul nach einem der Ansprüche 1 bis 9, **dadurch gekennzeichnet, dass** die Blattfeder (32) aus einer hitzebeständigen Legierung, beispielsweise auf Kobaltbasis, hergestellt ist.

11. Luftfahrzeug Turbomaschine, **dadurch gekennzeichnet, dass** es mindestens ein Modul nach einem der Ansprüche 1 bis 10 umfasst.

## Claims

1. A turbomachine module, in particular for aircraft, comprising an annular turbine nozzle sectorized and interposed axially between two structural elements, said turbine nozzle comprising several sectors (S) having guide vanes (4) which extend between inner (19) and outer (20) platform elements, at least one of said platform elements of each sector (S) carrying, on the one hand, at least one sealing blade (30) configured to ensure fluid sealing between said platform element (19, 20) and the adjacent structural element, and on the other hand, a device for holding said blade (30) in sealing position, the holding device comprising at least one leaf spring (32) extending circumferentially at the periphery of said platform element (19, 20) and supported on said blade (30); **characterized in that** each leaf spring (32) comprises a middle portion (34) fixed to a platform element of a sector (S), and opposite end portions (33, 35) which are supported on said blade (30) carried by this platform element (19, 20).

2. The turbomachine module according to claim 1, **characterized in that** a first end portion (33) of each leaf spring (32) is supported on a blade (30) close to a first circumferential end (30a) of this blade (30), and a second end portion (35) of this leaf spring (32) is supported on this blade (30) at a distance from a second circumferential end (30b) of this blade (30).

3. The turbomachine module according to claim 1 or 2, **characterized in that** said middle portion (34) is closer to the first end portion (33) than to the second end portion (35) of the leaf spring (32).

4. The turbomachine module according to any one of claims 1 to 3, **characterized in that** said middle portion (34) has a general C-shape and comprises two walls (34a, 34b) forming between them a space for receiving a first fastening tab (39a) of said platform element (19, 20).

5. The turbomachine module according to claim 4, **characterised in that** each leaf spring (32) is fixed by a rivet (36a) passing through said middle portion (34) and said first fastening tab (39a).

6. The turbomachine module according to claim 4 or 5, **characterised in that** the platform element (19, 20) of the sector (S) comprises a second end fastening tab (39b) independent of the leaf spring (32).

7. The turbomachine module according to any one of claims 1 to 6, **characterized in that** the end portions (33, 55) of each leaf spring (32) are thickened and each comprise a flat surface for support on a blade (30).

8. The turbomachine module according to any one of claims 1 to 7, **characterized in that** the blade (30) has a general curved or arch shape.

9. The turbomachine module according to any one of claims 1 to 8, **characterized in that** each leaf spring (32) extends over a length of between 60% and 80% of the total length of the blade (30).

10. The turbomachine module according to any one of claims 1 to 9, **characterized in that** the leaf spring (32) is made of a heat-resistant alloy, for example based on cobalt.

11. An aircraft turbomachine, **characterized in that** it comprises at least one module according to any one of claims 1 to 10.
